# EUROPÄISCHE PATENTANMELDUNG

(11) **EP 0 827 294 A2**
(43) Veröffentlichungstag der Anmeldung: **04.03.1998**
(21) Anmeldenummer: 97113046.3
(22) Anmeldetag: 29.07.1997
(51) Int. Cl.: H04B 7/26

(54) **Verfahren zum Belegen von Zeitschlitzen in drahtlosen Kommunikationsnetzen**

(30) Priorität: 30.08.1996 DE 19635327
(71) Anmelder: SIEMENS AKTIENGESELLSCHAFT, 80333 München (DE)
(72) Erfinder: Sibila, Arnd, 80999 München (DE)

(57) **Zusammenfassung**

In den Basisstationen (BS) von drahtlosen Kommunikationsnetzen - DECT, GAP, GSM - wird bei einer Funkverbindung die Zeitdifferenz (ZD) zwischen einem basisstationsinternen und einem empfangenen Zeitschlitz (ZS) gemessen und mit einem vorgegebenen Zeitdifferenzbereich (ZV) verglichen. In Abhängigkeit vom Vergleichsergebnis wird mit Hilfe der Basisstation (BS) entweder die Belegung eines Zeitschlitzes (ZS) in unmittelbarer Aufeinanderfolge oder bei einem Unter- bzw. Überschreiten die Belegung eines Zeitschlitzes (ZS) zusammen mit einem vorhergehenden bzw. folgenden blockierten Zeitschlitz (ZS) zugelassen wird.

## Beschreibung

Drahtlose Kommunikationsnetze - z.B. Mobilfunk- und Schnurlos- Kommunikationsnetze - mit mehreren Basisstationen und drahtlos angeschlossenen Kommunikationsendgeräten werden häufig gemäß dem standardisierten FDMA- (Frequency Division Multiple Access), dem TDMA- (Time Division Mulitple Access) oder dem CDMA-Verfahren (Code Division Multiple Access) realisiert. Eine optimale Nutzung von Übertragungskanälen zwischen den Basisstationen und den drahtlos angeschlossenen Kommunikationsendgeräten wird innerhalb eines definierten Funkbereichs einer Basisstation erreicht. Ein Überschreiten dieses definierten Funkbereichs bedeutet längere Laufzeiten auf der Funkstrecke, die insbesondere Laufzeitprobleme an den Übertragungskanalgrenzen verursachen können. Durch diese durch die längeren Laufzeiten verursachten zeitlichen Abweichungen können gegenseitige Störbeeinflussungen der Zeitschlitze bzw. Übertragungskanäle entstehen.

Um auftretende, gegenseitige Störbeeinflussungen bei asynchronen Basisstationen zu vermindern, wurde in der WO 94/ 10 811 vorgeschlagen, insbesondere bei nach dem FDMA- bzw. TDMA-Verfahren wirkenden, drahtlosen Kommunikationsnetzen, aus den verfügbaren Zeitschlitzen bzw. Übertragungskanälen nur eine Teilmenge nicht unmittelbar aufeinanderfolgender Zeitschlitze für die Funkverbindungen, insbesondere nur jeden zweiten Zeitschlitz, auszuwählen. Diese auch im DECT-Standard angegebene starre Aufteilung in belegbare und blockierte Zeitschlitzen vermindert zwar die gegenseitige Störbeeinflussung von Zeitschlitzen bzw. Nachrichtenkanälen, jedoch wird die Nutzung der Nachrichtenkanäle erheblich vermindert.

Die der Erfindung zugrundeliegende Aufgabe besteht darin, die Nutzung von Nachrichtenkanälen des eingangs erläuterten drahtlosen Kommunikationsnetzes zu verbessern. Die Aufgabe wird ausgehend von einem drahtlosen Kommunikationsnetz gemäß den Merkmalen des Oberbegriffs des Patentanspruchs 1 durch dessen kennzeichnende Merkmale gelöst.

Der wesentliche Aspekt des erfindungsgemäßen Verfahrens besteht darin, daß in den Basisstationen bei einer Funkverbindung die Zeitdifferenz zwischen einem basisstationsinternen und einem empfangenen Zeitschlitz gemessen wird und in Abhängigkeit von der gemessenen Zeitdifferenz wird mit Hilfe der Basisstationen entweder die Belegung der Zeitschlitze in unmittelbarer Aufeinanderfolge oder eine Belegung eines Zeitschlitz zusammen mit einem diesem vorhergehenden oder nachfolgenden, blockierten Zeitschlitz zugelassen. Eine Blockierung eines Zeitschlitzes bedeutet, daß dieser nicht mehr beispielsweise durch weitere Kommunikationsendgeräte belegt werden kann. Damit wird die Nutzung von Übertragungskanälen bzw. Zeitschlitzen durch blockierte Zeitschlitze nur dann verringert, sofern die Messung ergibt, daß die Abweichung hinsichtlich der jeweiligen Laufzeit, die der gemessenen Zeitdifferenz entspricht, zwischen den Basisstationen und drahtlos angeschlossenen Kommunikationsendgeräten unter- oder überschritten wird. Hierdurch wird die durchschnittliche Nutzung von Nachrichtenkanälen bzw. Zeitschlitzen gegenüber einer starren Aufteilung in belegbare und blockierte Zeitschlitze erheblich gesteigert, da für die drahtlosen Kommunikationsendgeräte, die von den Basisstationen entsprechend entfernt sind, die Zeitschlitze in unmittelbar Aufeinanderfolge belegt werden können. Bei beispielsweise weiter entfernten Kommunikationsendgeräten von den Basisstationen, beispielsweise bei DECT-Kommunikationsnetzen größer als 3 km, werden die Zeitschlitze bzw. Nachrichtenkanäle nicht in unmittelbarer Aufeinanderfolge, sondern mit einem zusätzlichen, blockierten Zeitschlitz, belegt.

Vorteilhaft wird die Zeitdifferenz zu Beginn einer Funkverbindung zwischen einem basisstationsinternen und einem vom jeweiligen Kommunikationsendgerät zur Basisstation gesendeten Zeitschlitz gemessen - Anspruch 2. Bei einer Funkübertragung nach dem DECT- Übertragungsverfahren wird die Zeitdifferenz zwischen einem basisstationsintern gebildeten Zeitschlitz und einer empfangenen, einen Verbindungsaufbau einleitenden Mac Access Request - Meldung ermittelt - Anspruch 3. Durch das Messen bei Beginn einer Kommunikationsbeziehung bzw. eines Verbindungsaufbaus einer Funkverbindung kann ein schnelles Blockieren eines Zeitschlitzes beim Aufbau einer Verbindung erreicht werden.

Gemäß einer vorteilhaften Ausgestaltung des erfindungsgemäßen Verfahren werden blockierte Zeitschlitze beim Ende einer Funkverbindung wieder freigegeben werden - Anspruch 4. Hierdurch wird eine dynamische Blockierung von Zeitschlitzen bewirkt, d.h. der jeweilige Zeitschlitz wird nur für die Dauer einer Funkverbindung blockiert und am Ende einer Funkverbindung wieder freigegeben.

Gemäß einer weiteren vorteilhaften Ausgestaltung des erfindungsgemäßen Verfahrens wird die gemessene Zeitdifferenz mit einem vorgegebenen Zeitdifferenzbereich verglichen und bei einer im Zeitdifferenzbereich befindlichen Zeitdifferenz werden die Zeitschlitze bzw. Nachrichtenkanäle in unmittelbarer Aufeinanderfolge belegt. Bei einem Unterschreiten des Zeitdifferenzbereichs wird der vorhergehende Zeitschlitz bzw. Nachrichtenkanal blockiert und bei einem Überschreiten des Zeitdifferenzbereichs wird der nachfolgende Zeitschlitz bzw. Nachrichtenkanal blockiert. - Anspruch 5. Der vorgegebene Zeitdifferenzbereich ist derart zu wählen, daß eine in diesem vorgegebenen Zeitdifferenzbereich gemessenen Zeitdifferenz - entspricht der doppelten Laufzeit von Funksignalen zwischen der Basisstation und einem Kommunikationsendgerät - keine gegenseitige Störbeeinflussung benachbarter Zeitschlitze und eine über oder unter diesem Zeitdifferenzbereich gemessene Zeitdifferenz eine Störbeeinflussung benachbarter Zeitschlitze verursachen würde.

Bei zeitmultiplexorientierten Funkverbindungen wird bei einer Belegung des letzten zu empfangenden Zeitschlitzes an der zeitrahmengrenze zu von der Basisstation zu sendenden Zeitschlitzen in Abhängigkeit von der gemessenen Zeitdifferenz entweder zusätzlich kein oder der vorhergehende und nachfolgende Zeitschlitz blockiert - Anspruch 6. Die Blockierung des vorhergehenden und des nachfolgenden Zeitschlitzes an der zeitrahmengrenze von 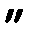 empangenden zu sendenden" Zeitschlitzen stellt eine Sicherheitsmaßnahme unter Berücksichtigung der Einschaltvorgänge der Sendeeinrichtungen in der Basisstation dar.

Gemäß einer Weiterbildung des erfindungsgemäßen Verfahrens wird die Blockierung eines Zeitschlitzes vor und/oder nach einem zugeteilten Zeitschlitz durch eine DECT-orientierte Blind Slot Information - Rundsendemeldung in dem jeweiligen Funkbereich mitgeteilt - Anspruch 7. Durch die Verwendung von standardisierten Meldungen - Blind Slot Information - Meldung und Mac Access Request - Meldung ist keine Änderung des DECT-Standards erforderlich.

Im folgenden wird das erfindungsgemäße Verfahren anhand zweier Blockschaltbilder und eines Ablaufdiagrammes näher erläutert. Dabei zeigen
- FIG 1: in einem Blockschaltbild eine Kommunikationsanordnung zur Realisierung des erfindungsgemäßen Verfahren,
- FIG 2: in einem Blockschaltbild den Aufbau eines TDMA- Rahmens und
- FIG 3: in einem Ablaufdiagramm die erfindungsgemäßen Verfahrensschritte.

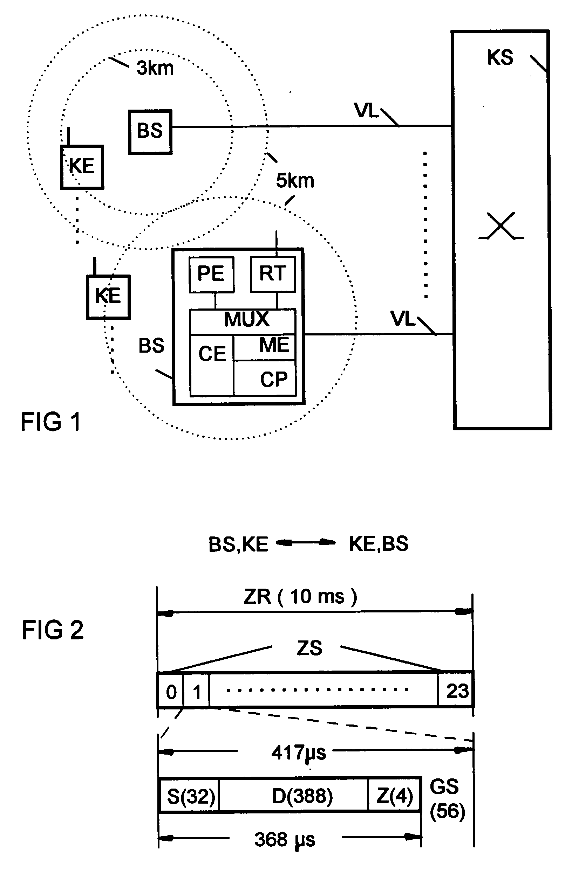

FIG 1 zeigt ein Kommunikationsnetz, das durch zumindest ein Kommunikationssystem KS gebildet ist. Das Kommunikationssystem KS ist über Verbindungsleitungen VL mit Basisstationen BS verbunden, wobei zur Erläuterung des erfindungsgemäßen Verfahrens lediglich zwei Kommunikationssysteme KS dargestellt sind. An die Basisstationen BS sind drahtlos Kommunikationsendgeräte KE angeschlossen, wobei die Luftschnittstelle gemäß dem DECT-Standard realisiert ist. Die Erfindung ist jedoch nicht auf diesen Standard beschränkt, sondern kann bei zeitschlitzorientierten, drahtlosen Kommunikationsnetzen, die beispielsweise gemäß anderen Standards wie GAP (Generic Access Profil) oder GSM- oder CT2- Standard ausgestaltet sind, eingesetzt werden.

Die Basisstationen sowie die drahtlos angeschlossenen Kommunikationsendgeräte KE sind beispielsweise wie in 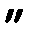 Telcom Report 10, 1987, Heft 2, Seiten 130 ff., 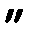 Auch ohne Schnur auf Draht" von W., Klaus und in DECT-Standard 300 175, 1991 beschrieben, realisiert. Hierbei sind die Basisstationen BS sowie die drahtlos angeschlossenen Kommunikationsendgeräte KE gleichartig strukturiert, d.h. weisen einen Funkteil RT auf, der über einen Multiplexer MUX mit peripheren Elementen PE verbunden ist - ist in FIG 1 in einer der beiden Basisstationen BS dargestellt. Die einzelnen Komponenten RT,PE und insbesondere der Multiplexer MUX werden von einer Steuereinrichtung CE koordiniert bzw. gesteuert. Das Funkteil RT weist zur Übertragung und zum Empfang von Funksignalen (z.B. TDMA- oder CDMA- Funksignale) zumindest eine Antenne auf. Der Funkteil FT enthält des weiteren Sender- und Empfängerkomponenten zum Empfang und Senden von DECT- oder CDMA- und von FDMA- orientierten Funksignalen. Im Multiplexer MUX werden beispielsweise 1,152 Mbit/s-Daten im DECT- Burstformat erzeugt und empfangen. Des weiteren werden für über die Basisstationen BS geführten Kommunikationsverbindungen, d.h. Sprach- und Datenverbindungen, beispielsweise gemäß dem TDMA- oder CDMA- Verfahren Datenpakete gebildet. Die peripheren Einrichtungen PE können beispielsweise ein Mikrofon, eine Piezo-Hörkapsel, einen Akkumulator, eine Tastatur sowie NF- und Tonrufverstärker umfassen.

Ein in der Steuereinrichtung CE implementiertes Steuerungsprogramm CP ist in derart ausgestaltet, daß aus den verfügbaren Zeitschlitzen (FIG 2) für eine aufzubauende Funkverbindung die Belegung eines Zeitschlitze entweder in unmittelbarer Aufeinanderfolge oder die Belegung eines Zeitschlitzes zusammen mit einem vorhergehenden oder nachfolgenden blockierten Zeitschlitz erfolgt. Des weiteren ist in der Steuereinrichtung CE ein Meßelement ME vorteilhaft programmtechnisch realisiert, mit dessen Hilfe die Zeitdifferenz ZD zwischen intern gebildeten und empfangenen Zeitschlitzen ZS gemessen wird.

Gemäß dem DECT-Verfahren treten in einem Umkreis von ca. 3 km keine, durch Laufzeiten verursachte gegenseitigen Störbeeinflussungen von benachbarten Zeitschlitzen bzw. Übertragungskanälen auf - in FIG 1 durch einen punktierten Kreis mit der Bezeichnung 3 km angedeutet. Der Einsatz von DECT- oder CDMA-Kommunikationsnetzen soll jedoch auf ca. einem 5 km- Umkreis erweitert werden, wobei in dem größer als 3 km entfernten Bereich aufgrund der Laufzeiten der Funksignale zwischen den Basisstationen BS und den Kommunikationsendgeräten gegenseitige Störbeeinflussungen von benachbarten Zeitschlitzen auftreten. Zur Vermeidung dieser Störbeeinflussungen und einer optimaleren Nutzung der Zeitschlitze ist die erfindungsgemäße Belegung von Zeitschlitzen vorgesehen.

FIG 2 zeigt einen DECT-spezifischen TDMA-Rahmen für Schnurlos-Kommunikationsanordnungen. Hierbei ist eine dynamische Kanalauswahl von 120 verfügbaren Übertragungskanälen bzw. Zeitschlitzen ZS möglich. Die 120 Zeitschlitze ZS ergeben sich DECT-gemäß durch zehn Frequenzbänder zwischen 1,8 und 1,9 GHz, wobei in FIG 2 die Zeitschlitzstruktur eines der gleichartig konzipierten Frequenzbänder dargestellt ist. Im Zeitmultiplexrahmen ZR von 10 ms sind 24 Zeitschlitze ZS bzw. Übertragungskanäle definiert. Dieses Rahmenschema wird derart angewandt, daß 12 bidirektional gerichtete Verbindungen - z.B. Telefonieverbindungen für jedes Frequenzband - zwischen einer Basisstation BS und drahtlos angeschlossenen Kommunikationsendgeräten KE gleichzeitig eingerichtet werden können. Ein Zeitschlitz ZS umfaßt 417 µs, in dem ein Zeitrahmen bzw. Impuls (Burst) von 365 µs mit einer Rahmenlänge von 424 Bit mit einem Datendurchsatz von 42 kbit/s übertragen wird. Dies bedeutet, daß in einem Zeitschlitz ZS eine komprimierte Sprachverbindung oder Daten mit einer Übermittlungsraten von 32 kbit/s übertragen werden können. Die 424 Bit sind DECT-gemäß in ein S-Feld von 32 Bit, ein D-Feld mit 388 Bit und ein Z-Feld von 4 Bit unterteilt. Am Ende des Zeitrahmen ist ein Sicherheitszeitrahmen GS mit 56 Bit zur Vermeidung von Überlappungen durch angrenzende Zeitschlitze ZS und damit zur Vermeidung von gegenseitigen Störbeeinflussungen von Nachbarzeitschlitzen ZS bzw. Nachbarkanälen vorgesehen.

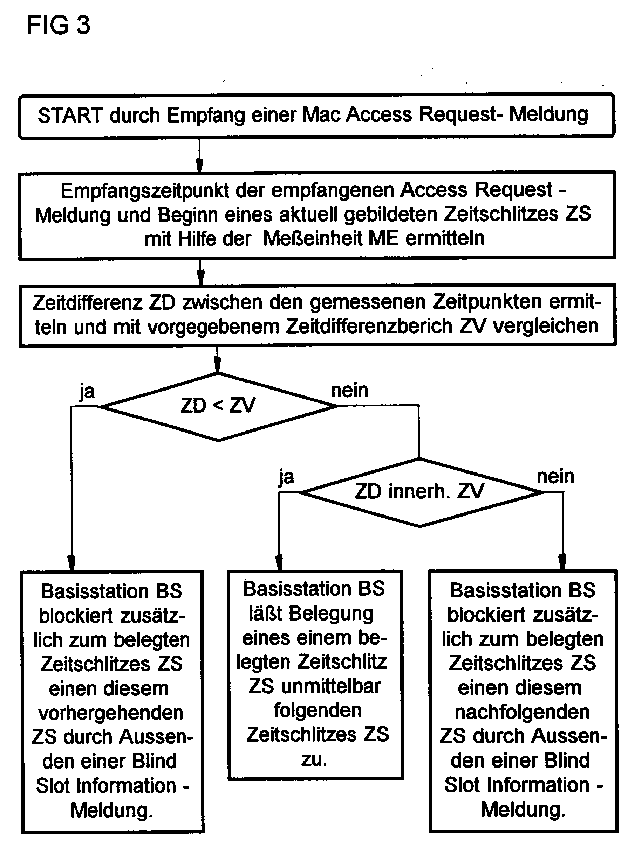

FIG 3 zeigt ein im wesentlichen selbsterläuterndes Ablaufdiagramm, das einen Teil des Steuerungsprogramms repräsentiert. Dieses Teilprogramm realisiert die wesentlichen Verfahrensschritte des erfindungsgemäßen Verfahrens, wobei die Zeitdifferenz DV ausgehend vom Beginn des jeweils intern gebildeten Zeitschlitz ZS zum Beginn einer jeweils empfangenen Mac Access Request - Meldung gemessen wird. Die Zeitdauer des vorgegebenen Zeitdifferenzbereichs ZV hängt im wesentlichen von dem Zeitumfang des in FIG 2 angegebenen Sicherheitszeitrahmens GS ab und ist gemäß den im verwendeten Standard angegebenen Werten - DECT-, CDMA-, GAP- und CT2-Standard - abzustimmen. Die Blockierung wird im jeweiligen Funkbereich bei einem nach dem DECT-Standard realisierten Schnurlos- Kommunikationsnetz durch Aussenden einer Blind Slot Information - Meldung gemeldet. Dies bedeutet, daß der geblockte Zeitschlitz ZS für Verbindungen anderer angeschlossener Kommunikationsendgeräte nicht mehr verfügbar ist. Da durch das erfindungsgemäße Verfahren eine dynamische Belegung von aufeinanderfolgenden und blockierten Zeitschlitzen ZS erreicht werden soll, wird jeweilis der blockierte Zeitschlitz ZS nur für die Dauer einer Funkverbindung blockiert und nach einem Auslösen der Funkverbindung wieder freigegeben. Durch das erfindungsgemäße Verfahren wird folglich eine bessere Nutzung der in einem Funkbereich verfügbaren - beim Ausführungsbeispiel beispielsweise ein Funkbereich von 5 km um die jeweilige Basisstation BS - der verfügbaren Zeitschlitze ZS erreicht.

## Patentansprüche

1. Verfahren zur Belegung von Zeitschlitzen (ZS) in drahtlosen Kommunikationsnetzen (KN), insbesondere Schnurlos-Kommunikationsnetzen (KN), mit mehreren Basisstationen (BS), an die drahtlos Kommunikationsendgeräte (KE) angeschlossen sind und Funkverbindungen auf zumindest einer vorgegebenen Frequenz und in mehreren zeitmultiplexorientierten Zeitschlitzen (ZS) erfolgen,
**dadurch gekennzeichnet,**
daß in den Basisstationen (BS) bei einer Funkverbindung die Zeitdifferenz (ZD) zwischen einem basisstationsinternen und einem empfangenen Zeitschlitz (ZS) gemessen wird,
daß in Abhängigkeit von der gemessenen Zeitdifferenz (ZD) mit Hilfe der Basisstationen (BS)
- entweder die Belegung der Zeitschlitze (ZS) in unmittelbarer Aufeinanderfolge oder
- eine Belegung der Zeitschlitze (ZS) jeweils zusammen mit einem diesem vorhergehenden oder nachfolgenden, blockierten Zeitschlitz (ZS)
zugelassen wird.

2. Verfahren nach Anspruch 1,
**dadurch gekennzeichnet,**
daß die Zeitdifferenz (ZD) zu Beginn einer Funkverbindung zwischen einem basisstationsinternen und einem vom jeweiligen Kommunikationsendgerät (KE) zur Basisstation (BS) gesendeten Zeitschlitz (ZS) gemessen wird.

3. Verfahren nach Anspruch 1 oder 2,
**dadurch gekennzeichnet,**
daß bei einer Funkübertragung nach dem DECT-Übertragungsverfahren die Zeitdifferenz (ZD) zwischen einem basisstationsintern gebildeten Zeitschlitz (ZS) und dem Beginn einer empfangenen, eine einen Verbindungsaufbau einleitende Mac Access Request - Meldung ermittelt wird.

4. Verfahren nach einem der Ansprüche 1 bis 3,
**dadurch gekennzeichnet,**
daß die blockierten Zeitschlitze (ZS) beim Ende einer Funkverbindung wieder freigegeben werden.

5. Verfahren nach einem der Ansprüche 1 bis 4,
**dadurch gekennzeichnet,**
daß die gemessene Zeitdifferenz (ZD) mit einem vorgegebenen Zeitdifferenzbereich (ZV) verglichen wird,
- daß bei einer im Zeitdifferenzbereich (ZV) befindlichen Zeitdifferenz (ZD) die Zeitschlitze (ZS) bzw. Nachrichtenkanäle in unmittelbarer Aufeinanderfolge,
- bei einem Unterschreiten des Zeitdifferenzbereichs (ZV) zusätzlich der vorhergehende Zeitschlitz (ZS) bzw. Nachrichtenkanal blockiert wird, und
- daß bei einem Überschreiten des Zeitdifferenzbereichs (ZV) zusätzlich der nachfolgende Zeitschlitz (ZS) bzw. Nachrichtenkanal blockiert wird.

6. Verfahren nach einem der Ansprüche 1 bis 5,
**dadurch gekennzeichnet,**
daß bei zeitmultiplexorientierten Funkverbindungen bei einer Belegung des letzten zu empfangenden Zeitschlitzes (ZS) an der Zeitrahmengrenze zu von der Basisstation (BS) zu sendenden Zeitschlitzen (ZS) in Abhängigkeit von der gemessenen Zeitdifferenz (ZD)
- entweder zusätzlich kein
- oder der vorhergehende und nachfolgende Zeitschlitz (ZS) blockiert wird.

7. Verfahren nach einem der Ansprüche 1 bis 6,
**dadurch gekennzeichnet,**
daß die Blockierung eines Zeitschlitzes (ZS) vor und/oder nach einem zugeteilten Zeitschlitz (ZS) durch eine DECT-orientierte Blind Slot Information - Rundsendemeldung in dem jeweiligen Funkbereich mitgeteilt wird.
